# EUROPEAN PATENT SPECIFICATION

(11) **EP 1 939 482 B1**
(45) Date of publication and mention of the grant of the patent: **29.08.2018**
(21) Application number: 07254432.3
(22) Date of filing: 12.11.2007
(51) Int. Cl.: F16D 25/08, F16D 48/06

(54) **Cylinder mechanism**
Zylindermechanismus
Mécanisme de cylindre

(30) Priority: 14.11.2006 JP 2006307917
(43) Date of publication of application: 02.07.2008
(73) Proprietor: TOYOTA JIDOSHA KABUSHIKI KAISHA, Toyota-shi, Aichi-ken, 471-8571 (JP)
(72) Inventor: Ota, Masayoshi, Toyota-shi Aichi-ken 471-8571 (JP)
(74) Representative: D Young & Co LLP

(56) References cited:
- EP-A1- 0 982 510
- EP-A1- 1 801 445
- FR-A1- 2 807 808

## Description

### BACKGROUND OF THE INVENTION

### 1. Field of the Invention

The present invention relates to a cylinder mechanism used to drive an automotive clutch. See EP0982510, FR2807808 and EP1801445 as the most relevant prior art documents.

### 2. Description of the Related Art

In a vehicle, such as an automobile, a clutch is generally installed between an engine and a transmission in order to connect/disconnect the engine to/from the transmission. The clutch includes an engagement member, which is connected to an output shaft of the engine and integrally rotated with the output shaft; a clutch plate, which is connected to an input shaft of the transmission and integrally rotated with the input shaft; and a lever which is biased to press the engagement member against the clutch plate, thereby engaging clutch. When the lever presses the engagement member against the clutch plate to thereby make both the engagement member and the clutch plate be in an engaged state, the engine is connected with the transmission via the clutch.

Further, the vehicle is equipped with a cylinder mechanism that drives the clutch and is described in, for example, Japanese Patent Application Publication No. JP-2002-349601 (see FIG. 1). The cylinder mechanism includes a piston, which can move toward and away from the lever, that is slidably mounted on the outer circumferential surface of a shaft member located on the same axis as the clutch plate. The piston slides in the axial direction of the shaft member. The cylinder mechanism also includes a spring, which biases a pressing member of the piston toward a reference position, at which the pressing member of the piston contacts the lever, and movement means, which moves the piston from the reference position to the lever. When the lever is displaced in a release direction, which is the direction opposite from the engagement direction, through the movement of the piston caused by the movement means, the clutch plate is disengaged from the engagement member, and thereby disconnecting the engine from the transmission.

Generally, the piston of the cylinder mechanism is brought into contact with the lever of the clutch through the biasing force of the spring. However, when the transmission is removedfrom the motor vehicle, the cylinder mechanism, which is attached to the transmission, becomes separated from the lever of the clutch, which is attached to the engine. Thus, when the transmission is removed from the motor vehicle, the piston of the cylinder mechanism is displaced further in the direction of lever by the biasing force of the spring because the lever is not present to engage the piston.

However, when the transmission is mounted on the motor vehicle, the position nearest to the lever in the movement range of the piston caused by the movement means is limited by the lever. However, when the transmission is removed from the motor vehicle and then the cylinder mechanism is separated from the lever of the clutch, the movement range of the piston is no longer limited by the lever. For this reason, the piston is displaced beyond the position nearest to the lever within the normal movement range by the biasing force of the spring.

In the area near the lever, beyond the ordinary movement range of the piston, foreign material such as dust may settle on the outer circumferential surface of the shaft member. Hence, when the piston is displaced to the portion near the lever, the foreign material may enter the area between the piston and the shaft member. This can interfere with the movement of the piston. If the transmission is remounted in the motor vehicle again in this state, the lever cannot be correctly displaced in the release direction by moving the piston by using the movement means, so that the reliability of operation of the clutch is degraded.

Thus, when the transmission is removed from the motor vehicle, the cylinder mechanism is typically replaced with a new one before remounting the transmission to avoid the above-described inconveniences. However, because the cylinder mechanism must be replaced with a new one whenever the transmission is removed from the motor vehicle, a high expense is incurred, and replacement work is troublesome.

### SUMMARY OF THE INVENTION

The present invention provides a cylinder mechanism that prevents foreign material from entering between a piston and a shaft member when the cylinder mechanism is separated from a lever.

A cylinder mechanism according to a first aspect of the invention manipulates a lever that is biased in an engagement direction to press an engagement member against a clutch plate. The cylinder mechanism also maintains the engaged state between the clutch plate and the engagement member. The cylinder mechanism includes a piston that is movable toward and away from the lever by sliding on the outer peripheral surface of a shaft member, which is located on the same axis as the clutch plate, in an axial direction; a spring that biases a pressing member of the piston toward a reference position, at which the pressing member contacts the lever; and movement means for moving the piston from the reference position toward the lever. The lever is displaced in a release direction, opposite to the engagement direction, through movement of the piston caused by the movement means to release the clutch plate and the engagement member. The cylinder mechanism further includes regulating means for preventing the piston from moving toward the lever from a position nearest to the lever within a normal movement range of the piston by the movement means.

The cylinder mechanism is, for example, used to operate the clutch installed between the engine and transmission of the motor vehicle. In other words, the cylinder mechanism is used to release the clutch by displacing the lever provided to the clutch in the appropriate direction. The cylinder mechanism is attached to the transmission. When the transmission is removed from the motor vehicle, the cylinder mechanism is separated from the lever. When the cylinder mechanism is separated from the lever, the piston shows a tendency to move beyond the position nearest to the lever within the normal movement range of the piston due to the biasing force of the spring. Here, in the lever-side portion beyond the normal movement range of the piston, the foreign material, such as dust, may settle on the outer surface of the shaft member. Hence, when the piston is displaced toward the opposite of lever side, the foreign material becomes trapped between the piston and the shaft member. This can interfere with the movement of the piston. However, in this configuration, the movement (displacement) of the piston is regulated by the regulating means, so that the foreign material is prevented from becoming trapped between the piston and the shaft member.

The first aspect of the invention may be configured as follows. The piston has a cylindrical shape and is fitted around the outer peripheral surface of the shaft member, and is inserted inside a cylindrical outer body located coaxially with the shaft member. The movement means moves the piston toward the lever by supplying working oil to a pressure chamber, provided at an end side of the piston opposite the lever side of the piston, defined by the shaft member, the piston and the outer body. Further, the regulating means controls the pressure in the pressure chamber such that the force acting on the piston due to the pressure in the pressure chamber acts in a direction opposite that of the biasing force of the spring and is greater than the biasing force.

With this configuration, when the cylinder mechanism is separated from the lever side, the pressure in the pressure chamber is controlled such that the force acting on the piston based on the pressure in the pressure chamber acts in the direction opposite the biasing force of the spring and is greater than the biasing force. Thus, the piston is prevented from moving further toward the lever from the position nearest the lever within the normal movement range of the piston.

Further, the first aspect of the invention may be configured as follows. The piston may have a cylindrical shape and is fitted around the outer peripheral surface of the shaft member, and is inserted inside a cylindrical outer body located coaxially with the shaft member. The movement means moves the piston toward the lever by supplying working oil to a pressure chamber, provided at an end side of the piston opposite the lever side of the piston, defined by the shaft member, the piston and the outer body. Further, the regulating means prevents working oil from flowing into and out of the pressure chamber.

With this configuration, when the cylinder mechanism is separated from the lever side, the working oil is prevented from flowing into and out of the pressure chamber. Thus, the piston is maintained at a position within the normal movement range of the piston, and is prevented from moving further toward the lever from the position nearest to the lever within the normal movement range of the piston.

The regulating means may further include an open-shut valve that is provided on a hydraulic pipe connected to the pressure chamber. The hydraulic pipe supplies and discharges the working oil with respect to the pressure chamber.

In this configuration, the inflow and outflow of the working oil of the pressure chamber is prevented by shutting the open-shut valve installed on the hydraulic pipe. This open-shut valve may be provided at a suitable position in the path of the hydraulic pipe, so that the open-shut valve is provided at an easily accessible position, and thus improves the accessibility of the open-shut valve.

Further, the regulating means may include an electronic control unit that controls the operation of the regulating means in accordance with an operation state of a motor vehicle. The electronic control unit prevents the operation of the regulating means when the motor vehicle is being operated and permits the operation of the regulating means when the motor vehicle is not being operating.

If the regulation means is operated when the motor vehicle is being operated, this can interfere with the operation of the clutch by the cylinder mechanism. However, in this configuration, the operation of the regulation means is permitted only when the motor vehicle is not being operated. Thus, the operation of the regulation means avoids interfering with the operation of the clutch.

### BRIEF DESCRIPTION OF THE DRAWINGS

The above and other features and advantages of the present invention will become apparent from the following description of example embodiments given in conjunction with the accompanying drawings, in which:
FIG. 1 is an enlarged cross-sectional view illustrating a connection of a transmission and an engine of a motor vehicle having a clutch operated by a cylinder mechanism in accordance with an embodiment of the present invention;
FIG. 2 is an enlarged cross-sectional view illustrating an area around a piston in the cylinder mechanism;
FIG. 3 is an enlarged cross-sectional view illustrating an area around the piston in the cylinder mechanism;
FIG. 4 is a cross-sectional view illustrating an area around the cylinder mechanism when the transmission is removed from the motor vehicle;
FIG. 5 is an enlarged cross-sectional view illustrating the area around the piston in the cylinder mechanism; and
FIG. 6 is a schematic view illustrating an area around an open-shut valve in the case in which the open-shut valve is opened and shut through an operational control of an electronic control unit.

### DETAILED DESCRIPTION OF THE EMODIMENTS

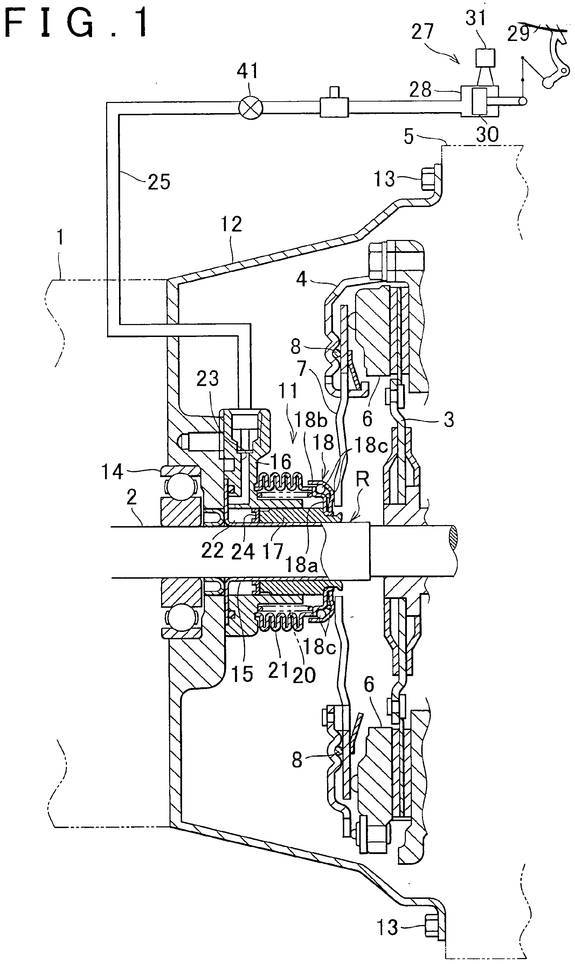

Hereinafter, an embodiment of a cylinder mechanism used to drive the clutch in an automobile in accordance with the present invention will be described with reference to FIGS. 1 to 5. In the automobile, the clutch is installed between an engine and a transmission, and is operated to connect or disconnect the engine and the transmission. As illustrated in FIG. 1, the clutch includes a clutch plate 3 connected to an input shaft 2 of the transmission 1 and thus integrally rotates with the input shaft 2, as well as a clutch cover 4, which is connected to an output shaft (not shown) of the engine 5 and thus is integrally rotated with the output shaft. The clutch plate 3 and the clutch cover 4 are arranged on a same axis as the input shaft 2 of the transmission 1. The input shaft 2 passes through the clutch plate 3 such that it can be separated from the clutch plate 3 in an axial direction.

The clutch cover 4 supports a diaphragm spring 7, to which an engagement member 6 that engages the clutch plate 3, is attached. The diaphragm spring 7 functions as a lever that biases the engagement member 6 in an engagement direction (toward the right side in FIG. 1) to press the engagement member 6 against the clutch plate 3. More specifically, the diaphragm spring 7 may be a coned disc spring that biases the engagement member 6 in the engagement direction.

The engagement member 6 is attached to a portion of the diaphragm spring 7 that is located farthest from the input shaft 2 (hereinafter "peripheral portion of the diaphragm spring"). Further, in the diaphragm spring 7, an intermediate portion, between the portion nearest to the input shaft 2 and the peripheral portion of the diaphragm spring 7, is in contact with a fulcrum 8 of the clutch cover 4. When the portion of the diaphragm spring 7 located nearest to the input shaft 2 (hereinafter "central portion of the diaphragm spring") is pressed toward the clutch plate 3, the diaphragm spring 7 is displaced in a releasing direction, i.e., a counter clockwise direction about the fulcrum 8, that is opposite engagement direction, so that the engagement member 6 moves away from the clutch plate 3.

When the central portion of the diaphragm spring 7 is not pressed toward the clutch plate 3, the engagement member 6 is pushed in the engagement direction by the biasing force of the diaphragm spring 7, thereby pressing the engagement member 6 against the clutch plate 3. As a result, the engagement member 6 engages the clutch plate 3. At this time, the engine 5 is connected with the transmission 1 via the clutch, so that rotational force may be transmitted between the engine 5 and the transmission 1.

In contrast, when the central portion of the diaphragm spring 7 is pressed toward the clutch plate 3, the diaphragm spring 7 is displaced in the release direction, and thus the engagement member 6 moves away from the clutch plate 3. As a result, the engagement member 6 disengages the clutch plate 3. At this time, the engine 5 is disconnected from the transmission 1, so that rotational force cannot be transmitted between the engine 5 and the transmission 1.

Next, a cylinder mechanism 11 that manipulates the diaphragm spring 7 in order to connect and disconnect the clutch will be described. This cylinder mechanism 11 is attached to a clutch housing 12. The clutch housing 12 is fixed to the engine 5 and to the transmission 1 using, for instance, bolts 13. Further, the clutch housing 12 is provided with a bearing 14 that rotatably supports the input shaft 2 of the transmission 1. The input shaft 2 of the transmission 1 passes through the cylinder mechanism 11 attached to the clutch housing 12.

The cylinder mechanism 11 includes a cylindrical inner body 15, which is fixed to the clutch housing 12 and extends along the same axis as the input shaft 2; an outer body 16, which is also fixed to the clutch housing 12 and is located on the same axis as the input shaft 2, that surrounds the outer perimeter of the inner body 15; and a cylindrical piston 17, which is installed between the inner body 15 and the outer body 16.

The piston 17 slides on the outer peripheral surface of the inner body 15 in the direction of the central line of the inner body 15. The end portion of the piston 17 that faces the diaphragm spring 7 is exposed from a right end of the outer body 16 toward the diaphragm spring 7. An inner race 18a of a bearing 18 is fixedly fitted around the end of the piston 17. Between the inner race 18a of the bearing 18 and the outer body 16, a spring 20 that presses the bearing 18 and the piston 17 against the diaphragm spring 7 is installed together with a cylindrical bellows 21, which surrounds the outer side of the spring 20 in the circumferential direction of the input shaft 2. The bellows 21 prevents dust from entering the piston 17, and can expand or contract in the axial direction of the input shaft 2. Both ends of the bellows 21, lined along axial direction of the input shaft 2, are fixed to the outer body 16 and the inner race 18a, respectively.

The piston 17 is biased toward a reference position, i.e. a position where the piston 17 contacts the central portion of the diaphragm spring 7 (to be precise, the portion at which the bearing 18 comes in contact with the portion of the diaphragm spring 7) by the spring 20. Further, when the piston 17 is pressed at the reference position by the spring 20, an outer race 18b of the bearing 18 is pressed to the portion of the diaphragm spring 7 that is nearest to the input shaft 2 by the biasing force of the spring 20. In this state, when the clutch cover 4 and the diaphragm spring 7 are rotated in conjunction with the rotation of the engine 5, the outer race 18b of the bearing 18, which is pressed to the portion of the diaphragm spring 7 by the biasing force of the spring 20, is rotated together with the diaphragm spring 7, and thus balls 18c located between the inner and outer races 18a and 18b of the bearing 18 are made to rotate.

Further, when the diaphragm spring 7 and the outer race 18b rotate, the spring 20 serves to prevent abnormal sounds from being made by relative displacement between the diaphragm spring 7 and the outer race 18b in the rotational direction. In other words, the magnitude of the biasing force of the spring 20 is preset such that there is no relative displacement generated along the rotational direction between the diaphragm spring 7 and the outer race 18b when the diaphragm spring 7 is rotated.

A pressure chamber 22 filled with oil as working oil is formed at a portion of the cylinder mechanism 11 that is surrounded by the inner body 15, the outer body 16 and the piston 17, i.e. which being adjacent to one end of the piston 17, the other end of which is located on the side of the diaphragm spring 7. The pressure chamber 22 is connected with an oil passage 23 formed in the outer body 16. Further, at one end of the piston 17, which is located on the side of the pressure chamber 22, there is fixed a cup 24 that acts as a seal preventing oil leakage between the outer circumferential surface of the inner body 15 and the inner circumferential surface of the piston 17 and between the inner circumferential surface of the outer body 16 and the outer circumferential surface of the piston 17 in the pressure chamber 22.

The pressure chamber 22 is supplied with oil, so that the oil in the pressure chamber 22 is pressurized. When the pressure in the pressure chamber 22 is increased, the piston 17 is displaced from a reference position toward the diaphragm spring 7 by the force derived from the increased pressure, thereby pressing the central portion of the diaphragm spring 7. Thus, the diaphragm spring 7 is displaced in a release direction, and the engagement member 6 moves away from the clutch plate 3. Accordingly, the clutch is thereby disengaged.

Further, when the pressure inside the pressure chamber 22 is decreased by decompressing the oil in the pressure chamber 22, the pressure acting on the diaphragm spring 7 by the piston 17 also decreases. For this reason, the diaphragm spring 7 is displaced in the engagement direction by the biasing force thereof, and thus the biasing force causes the engagement member 6 to make a close contact with the clutch plate 3. Accordingly, the clutch is thereby engaged. At this time, the piston 17 moves in a direction opposite to the engagement direction when the diaphragm spring 7 is displaced in the engagement direction, thereby returning the piston to the reference position.

Next, the structure in which the piston 17 of the cylinder mechanism 11 is displaced in a direction toward the diaphragm spring 7 or opposite thereto will be described, that is, along a central axis of the inner body 15 by pressurizing or decompressing the oil in the pressure chamber 22.

In the cylinder mechanism 11, the oil passage 23 of the outer body 16 is connected with an oil pipe 25, which supplies the oil to the pressure chamber 22 via the oil passage 23. The oil pipe 25 is extended through the out side of the clutch housing 12. Further, a portion of the oil pipe 25 that extends to the outside of the clutch housing 12 is provided with a bleeder 26 for discharging the air. Further, a part of the oil pipe 25, which is located on the upstream side of the bleeder 26, is connected to a pressurizing unit 27 for pressing the oil in the pressure chamber 22 of the cylinder mechanism 11.

The pressurizing unit 27 includes a cylinder 28 to which the oil pipe 25 is connected, a piston 30 that reciprocates in the cylinder 28 in response to the operation of a clutch pedal 29, and a reserve tank 31, which is connected to the cylinder 28, that supplies a complementing amount of oil when an insufficient amount of oil is supplied and receiving surplus amount of oil when oil is oversupplied. Further, in the pressurizing unit 27, a neutral position of the clutch pedal 29 may be adjusted by a pedal adjustment screw, and a neutral position of the piston 30 may be adjusted by a piston adjustment screw.

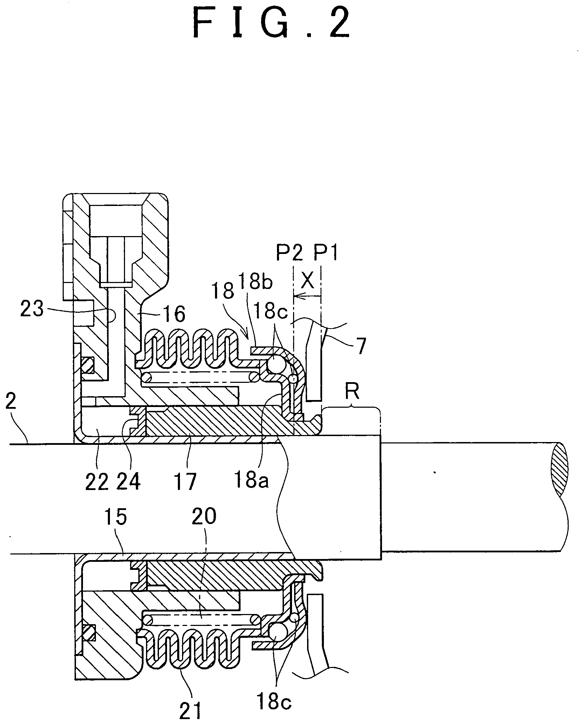

In the pressurizing unit 27, the oil in the cylinder 28 is delivered to the oil pipe 25 by the movement of the piston 30 when a clutch pedal 29 is depressed. Accordingly, the oil in the pressure chamber 22 of the cylinder mechanism 11 is pressurized so that when the piston 17 moves from the reference position P2 towards the diaphragm spring 7, the capacity of the pressure chamber 22 is increased, and the oil flows into the pressure chamber 22 through the oil passage 23 and the oil pipe 25. The movement of the piston 17 causes the piston 17 to press the central portion of the diaphragm spring 7. As a result, the diaphragm spring 7 is displaced in a release direction, and the engagement member 6 moves away from the clutch plate 3. Thereby, the engagement member 6 is disengaged from the clutch plate 3. FIG. 2 is an enlarged view illustrating the position (i.e. a position P1 in the drawing) of the piston 17 with respect to the central line of the inner body 15 in the cylinder mechanism 11 in the released state.

Further, when the clutch pedal 29 of FIG. 1 is released, the clutch pedal 29 returns to its original position due to the biasing force of a return spring (not shown), and the resultant movement of the piston 30 of the pressurizing unit 27 causes the oil in the oil pipe 25 to be drawn into the cylinder 28. Accordingly, the oil in the pressure chamber 22 of the cylinder mechanism 11 is depressurized, and thus the pressing of the piston 17 of the cylinder mechanism 11 against the diaphragm spring 7 is released. As a result, the diaphragm spring 7 is displaced in the engagement direction on the basis of the biasing force of the diaphragm spring 7, and the engagement member 6 is pressed against the clutch plate 3. Thus, the engagement member 6 engages the clutch plate 3. At this time, when the diaphragm spring 7 is displaced in the engagement direction, the piston 17 is displaced in the direction in which the capacity of the pressure chamber 22 is reduced. Thus, the oil in the pressure chamber 22 flows to the oil passage 23 and the oil pipe 25.

Further, the displacement of the diaphragm spring 7 in the engagement direction causes the piston 17 to move from the position P1 indicated in FIG. 2 by a distance X in the direction in which the capacity of the pressure chamber 22 is reduced, thereby returning the piston 17 to the reference position P2. Thus, when the clutch pedal 29 is operated to release or engage the clutch, the range in which the piston 17 of the cylinder mechanism 11 is displaced along the central line of the inner body 15 is between the reference position P2 to the position P1 in the drawing. Accordingly, the portion of the outer peripheral surface of the inner body 15 lying toward the diaphragm spring 7 from the position (position PI) that is nearest to the diaphragm spring 7 is always exposed to the outside. For this reason, this portion (hereinafter, referred to as "exposed portion R") cannot avoid being contaminated with foreign material such as dust.

The movement range of the piston 17 is shifted to the side (left side in FIG. 2) of the transmission 1 as the engagement member 6 of FIG. 1 becomes worn in the clutch. This is because, as the engagement member 6 becomes worn, the portion of the diaphragm spring 7 that is nearest to the input shaft 2 is displaced in a clockwise direction about the fulcrum 8. In this manner, when the movement range of the piston 17 is shifted to left in FIG. 2 by the increase of the abrasion of the engagement member 6, the exposed portion R of the inner body 15 expands to the left in the drawing.

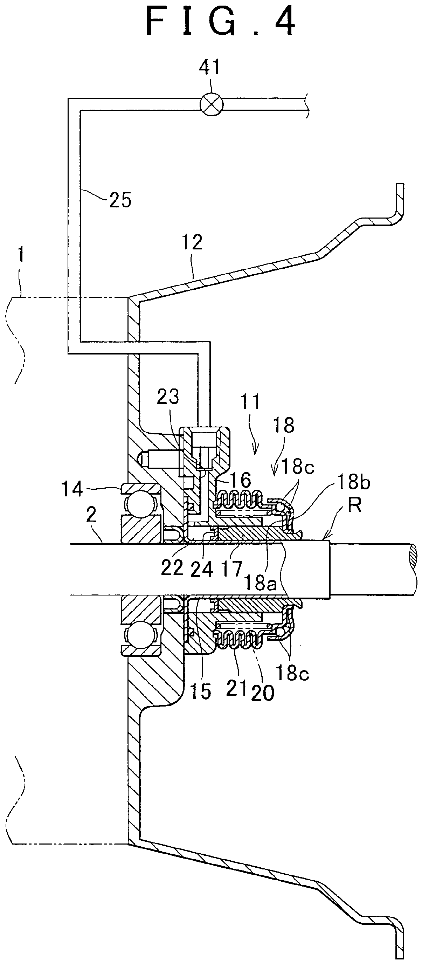

Next, the movement of the piston 17 of the cylinder mechanism 11 when the transmission 1 is removed from the motor vehicle will be described. When the transmission 1 shown in FIG. 1 is removed from the motor vehicle, the following operations [1] through [3] are sequentially carried out. [1] A portion of the oil pipe 25, which is located on the downstream side of the bleeder 26, i.e. on the side of the cylinder mechanism 11, is separated from the bleeder 26, thereby separating the pressurizing unit 27 and the cylinder mechanism 11. [2] The bolts 13 fixing the clutch housing 12 to the engine 5 are separated. [3] The entire transmission 1 is moved in a direction separating it from the engine 5, i.e. in the left-hand direction in the drawing, thereby pulling the input shaft 2 of the transmission 1 out of the clutch plate 3 while separating the cylinder mechanism 11 from the diaphragm spring 7. By performing operations [1] through [3] in sequence, the transmission 1 is removed from the engine 5 together with the cylinder mechanism 11, as illustrated in FIG. 4, and thus is removed from the motor vehicle.

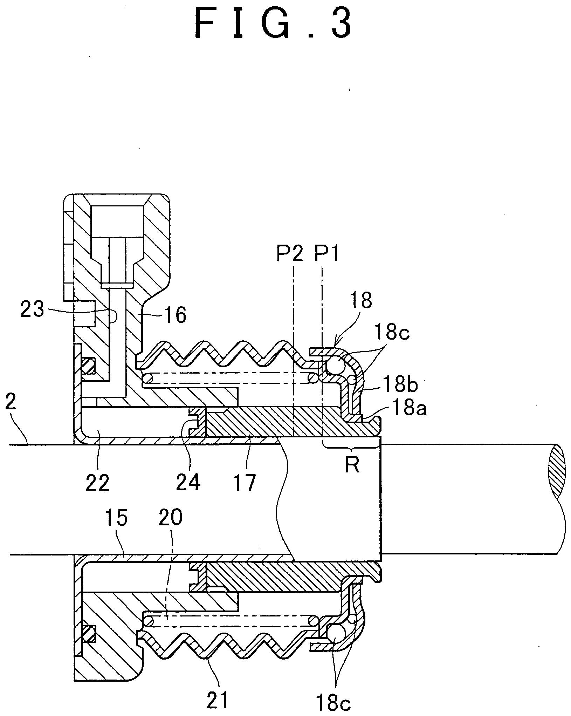

When the transmission 1 is mounted in the motor vehicle (FIG. 1), the piston 17 (particularly, the bearing 18) of the cylinder mechanism 11 is in contact with the diaphragm spring 7 due to the biasing force of the spring 20. In contrast, when the transmission 1 is removed from the motor vehicle, the piston 17 of the cylinder mechanism 11 is not in contact with the diaphragm spring 7. As such, the piston 17 is pressed in the direction (right-hand direction of FIG. 1) in which the capacity of the pressure chamber 22 is increased by the biasing force of the spring 20. Because the portion of the oil pipe 25 that is separated from the bleeder 26 is exposed to atmospheric pressure and the piston 17 is pressed by the biasing force of the spring 20, as described above, the oil existing in the oil pipe 25 and the oil passage 23 flows into the pressure chamber 22, thereby the piston 17 moves in the right-hand direction in the drawing. As a result, as illustrated in FIG. 3, the piston 17 is displaced from the position PI, which is nearest to the exposed portion R in the normal movement range (from P2 to PI) of the piston 17, toward the the exposed portion R (the side of the diaphragm spring 7 in FIG. 1).

Here, the inconvenience caused by the displacement of the piston 17 is described. The foreign material such as dust settles on the exposed portion R of the inner body 15, as described above. For this reason, when the piston 17 is displaced towards the exposed portion R, the foreign material becomes stuck between the piston 17 and the inner body 15, which interferes with the movement of the piston 17. If the transmission 1 is mounted in the motor vehicle again in this state, an attempt to move the piston 17 to displace the diaphragm spring 7 in the release direction may be unsuccessful. Consequently, the reliability when operating the clutch is deteriorated. Further, when the engagement member 6 (FIG. 1) of the clutch is worn and thus the exposed portion R extends in the left-hand direction of FIG. 3, the accumulated foreign materials stuck may reach the cup 24. Thus, the ability to seal the pressure chamber 22 by the aid of the cup 24 may be reduced by the hindrance in the movement of the piston 17 due to the engagement of the foreign materials.

In order to cope with this inconvenience, in this embodiment, as illustrated in FIG. 1, the portion of the oil pipe 25 that is located downstream of the bleeder 26 and is exposed to the outside of the clutch housing 12 is provided with an open-shut valve 41 for regulating the flow of the oil. When opened, the open-shut valve 41 allows the flow of the oil, thereby enabling the oil to flow into and out of the pressure chamber 22 of the cylinder mechanism 11. However, when it is shut, the open-shut valve 41 prevents the flow of the oil, thereby preventing the oil from flowing into or out of the pressure chamber 22.

When the transmission is removed from the motor vehicle, the following operations are sequentially carried out before the work [1] is performed. In the pressurizing unit 27, the piston 30 in the cylinder 28 is displaced in a direction away from the oil pipe 25 by manipulating the pedal adjustment screw or the piston adjustment screw, and the oil is drawn from the oil pipe 25 into the cylinder 28. Thus, the oil in the pressure chamber 22 of the cylinder mechanism 11 is drawn toward the oil passage 23 and the oil pipe 25.

The open-shut valve 41 is shut manually. Thus, the oil is prevented from flowing into and out of the pressure chamber 22 of the cylinder mechanism 11. By shutting the open-shut valve 41, the oil pipe 25 connected to the oil passage 23 of the cylinder mechanism 11 is no longer exposed to the atmospheric pressure when the transmission is removed from the motor vehicle by subsequently carrying out the operations [1] through [3].

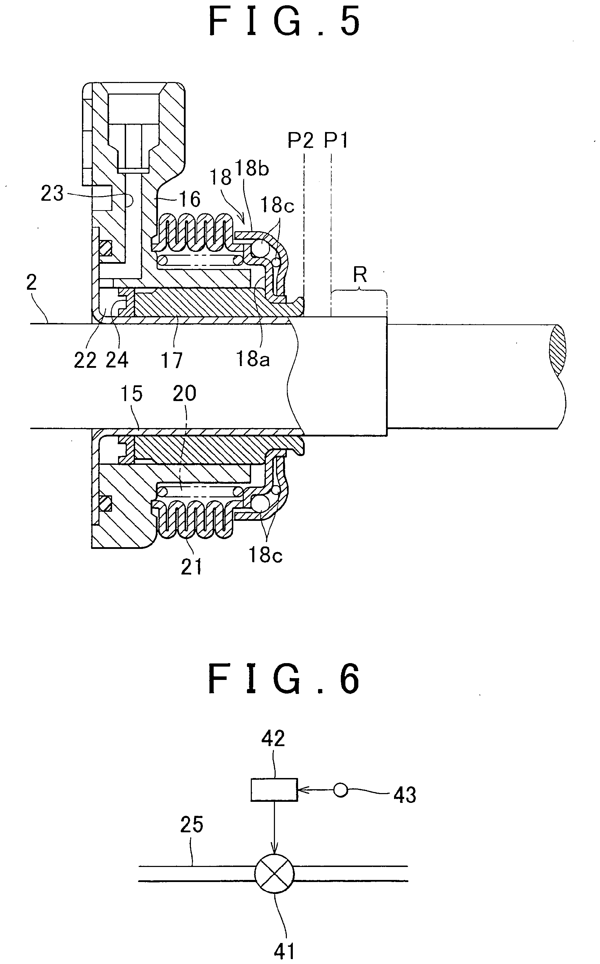

Hence, after the transmission 1 is removed, the piston 17 of the cylinder mechanism 11 is pressed in the direction (toward the right in FIG. 1) in which the capacity of the pressure chamber 22 is increased by the biasing force of the spring 20. Even in this case, the oil present in the oil pipe 25 and the oil passage 23 does not flow into the pressure chamber 22, thereby preventing the piston 17 from moving in the right-hand direction in the drawing. Accordingly, as illustrated in FIG. 5, the position of the piston 17 is maintained at a position (reference position P2 in the example of FIG. 5) within the normal movement range (between P2 and PI), so that the piston 17 does not move into the exposed portion R. For this reason, the inconvenience due to the accumulation of the foreign material attached to the exposed portion R between the piston 17 and the inner body 15 are avoided.

In the embodiment as described above, the following effects are obtained. (1) When the transmission 1 is removed from the motor vehicle, the cylinder mechanism 11 is separated from the side of the diaphragm spring 7 in the clutch in the state in which the open-shut valve 41 is shut. At this time, because the oil is prevented from flowing into or out of the pressure chamber 22 of the cylinder mechanism 11 when the open-shut valve 41 is shut, the piston 17 of the cylinder mechanism 11 is prevented from moving in the direction in which the capacity of the pressure chamber 22 is increased toward the diaphragm spring 7, even when it is pressed in the capacity-increasing direction by the spring 20. Thus, the piston 17 is maintained within the normal movement range (between P2 and PI) by shutting the open-shut valve 41. As such, the piston 17 is prevented from moving beyond the normal movement range into the exposed portion R, so that the foreign material present on the exposed portion R is reliably prevented from becoming trapped between the piston 17 and the inner body 15 by the movement of the piston 17.

(2) When the transmission 1 is removed from the motor vehicle, the open-shut valve 41 is shut in the state in which the oil is drawn into the cylinder 28 from the oil pipe 25 by displacement of the piston 30 of the pressurizing unit 27 in a direction away from the oil pipe 25 through the manipulation of the pedal or piston adjustment screw of the pressurizing unit 27. Here, when the cylinder mechanism 11 is separated from the side of the diaphragm spring 7 by shutting the open-shut valve 41, the piston 17 of the cylinder mechanism 11 is pressed in the direction in which the capacity of the pressure chamber 22 is increased by the biasing force of the spring 20. Thereby, the oil in the pressure chamber 22 and so forth expands, so that the piston 17 can move in the capacity-increasing direction to some extent. However, as described above, the shutting of the open-shut valve 41 limits movement of the piston 17 to within the normal movement range, even when the piston 17 moves to some extent in the direction in which the capacity of the pressure chamber 22 is increased by the biasing force of the spring 20.

(3) The open-shut valve 41 is attached to a portion of the oil pipe 25 that extends outside the clutch housing 12. Thus, the open-shut valve 41 is easily manipulated manually, so that it is possible to improve the manipulation of the open-shut valve 41.

Further, the embodiment may be modified, for example, as follows. The open-shut valve 41 may be automatically opened and shut through an operational control of an electronic control unit 42, as illustrated in FIG. 6 by employing an electromagnetic valve as the open-shut valve 41. In this case, the electronic control unit 42 determines whether the motor vehicle is driven based on an off signal from the ignition switch 43, and then controls the opening and shutting of the open-shut valve 41 in accordance with the determination. More specifically, if it is determined that there is no off signal from the ignition switch 43 and that the motor vehicle is operating, the open-shut valve 41 is opened. If it is determined that there is an off signal from the ignition switch 43 and that the motor vehicle is not operating, the open-shut valve 41 is shut. Here, if the open-shut valve 41 is shut when the motor vehicle is operating and thus the piston 17 of the cylinder mechanism 11 is prevented from moving, this may interfere with the operation of the clutch by the cylinder mechanism 11. However, as described above, by controlling the opening and shutting of the open-shut valve 41, the open-shut valve 41 is prevented from being shut while the motor vehicle is operating, and thus is open, so that the piston 17 is prevented from stopping during the operation of the motor vehicle, and thus avoids interfering with the driving of the clutch.

The position at which the open-shut valve 41 is installed may be modified as appropriate. The open-shut valve 41 may be attached as close to the pressure chamber 22 of the cylinder mechanism 11 as possible, to minimize the amount of the oil sealed by the pressure chamber 22 and the resultant expansion of the oil when the open-shut valve 41 is shut. Further, as described above, if the electronic control unit 42 controls the operation of the open-shut valve 41, a worker does not need to manually open or shut the open-shut valve 41. Hence, the open-shut valve 41 is installed in the clutch housing 12, and may be installed at a position closer to the pressure chamber 22.

An oil pump for drawing the oil from the pressure chamber 22 may be provided in place of the open-shut valve 41. When the oil pipe 25 is separated from the bleeder 26, the pressure in the pressure chamber 22 is controlled through the operational control of the oil pump by the electronic control unit. Thereby, the displacement toward the exposed portion R of the piston 17 in the cylinder mechanism 11 may be regulated. In this case, the force acting on the piston 17 due to the pressure in the pressure chamber 22 acts in the direction opposite to the biasing force of the spring 20. Thus, the operation of the oil pump is controlled such that the force acting on the piston 17 due to the pressure in the pressure chamber 22 is equal to or greater than the biasing force of the spring 20, so that the displacement toward the exposed portion R of the piston 17 is limited. Further, if the force acting on the piston 17 due to the pressure in the pressure chamber 22 is equal to the biasing force of the spring 20, the piston 17 is maintained at a predetermined position within the normal movement range (between P2 and PI). Further, if the force acting on the piston 17 due to the pressure in the pressure chamber 22 is greater than the biasing force of the spring 20, the piston 17 is pulled to a position in the direction in which the capacity of the pressure chamber 22 is reduced, beyond the reference position P2. With this configuration, the oil pump and the electronic control unit function as regulating means for limiting the movement of the piston towards the exposed portion R of the piston 17.

In place of the diaphragm spring 7, a lever biased in the engagement direction by a separate spring may be employed. The lever may press the engagement member 6 against the clutch plate 3.

The piston 17 may be fixed at a position within its normal movement range by using a jig that fixes the position of the piston 17. In this case, the jig functions as regulating means for limiting the movement towards the exposed portion R of the piston 17.

## Claims

1. A cylinder mechanism (11), which manipulates a lever (7) that is biased in an engagement direction to press an engagement member (6) against a clutch plate (3) and that maintains an engaged state between the clutch plate (3) and the engagement member (6), the cylinder mechanism (11) includes: a piston (17) that is movable toward and away from the lever (7) by sliding on the outer peripheral surface of a shaft member (15), which is located on the same axis as the clutch plate (3), in an axial direction; a spring (20) that biases a pressing member of the piston (17) toward a reference position at which the pressing member contacts the lever (7); and movement means (27) for moving the piston (17) from the reference position toward the lever (7), wherein, when the lever (7) is displaced to release the clutch plate (3) and the engagement member (6) by the movement of the piston (17), caused by the movement means (27), the cylinder mechanism (11) **characterized by** comprising:
regulating means (41, 42) for preventing the piston (17) from being moved by the movement means (27) further in a release direction from a position nearest to the lever (7) within a normal movement range of the piston (17),
wherein the regulating means (41, 42) prevents the piston (17) from being moved in the release direction beyond the position nearest to the lever (7) by a biasing force exerted by the spring (20) when the lever (7) is separated from the piston (17).

2. The cylinder mechanism of claim 1, wherein the piston (17) has a cylindrical shape and is fitted around the outer peripheral surface of the shaft member (15), and is inserted inside a cylindrical outer body (16) located coaxially with the shaft member (15); the movement means (27) moves the piston (17) toward the lever (7) by supplying working oil to a pressure chamber (22), provided at an end side of the piston (17) opposite the lever side of the piston (17), defined by the shaft member (15), the piston (17) and the outer body (16); and the regulating means (41, 42) controls the pressure in the pressure chamber (22) such that force acting on the piston (17) due to the pressure in the pressure chamber (22) acts in a direction opposite that of a biasing force of the spring (20) and is greater than the biasing force.

3. The cylinder mechanism of claim 1, wherein the piston (17) has a cylindrical shape and is fitted around the outer peripheral surface of the shaft member (15), and is inserted inside a cylindrical outer body (16) located coaxially with the shaft member (15); the movement means (27) moves the piston (17) toward the lever (7) by supplying working oil to a pressure chamber (22), provided at an end side of the piston (17) opposite the lever side of the piston (17), defined by the shaft member (15), the piston (17) and the outer body (16); and the regulating means (41, 42) prevents working oil from flowing into and out of the pressure chamber (22).

4. The cylinder mechanism of claim 3, wherein the regulating means (41, 42) includes an open-shut valve (41) that is provided on a hydraulic pipe (25) connected to the pressure chamber (22), wherein the hydraulic pipe (25) supplies and discharges the working oil with respect to the pressure chamber (22).

5. The cylinder mechanism of claim 4, wherein the open-shut valve (41) is provided outside a clutch housing (12).

6. The cylinder mechanism of claim 1 or 2, wherein the regulating means includes a pump for drawing the oil from the pressure chamber (22).

7. The cylinder mechanism of any one of claims 1 to 6, wherein the regulating means (41, 42) includes an electronic control unit (42) that controls the operation of the regulating means (41) in accordance with an operation state of a motor vehicle; and the electronic control unit (42) prevents the operation of the regulating means (41) when the motor vehicle is being operated and permits the operation of the regulating means (41) when the motor vehicle is not being operated.

8. The cylinder mechanism of claim 7, wherein the regulating means (41, 42) is provided in a clutch housing (12).

9. The cylinder mechanism of claim 4, wherein the open-shut valve (41) is provided in the portion of the oil pipe (25) that is located downstream of a bleeder (26).

## Patentansprüche

1. Zylindermechanismus (11), der einen Hebel (7) betätigt, der in eine Eingriffsrichtung vorgespannt ist, um ein Eingriffselement (6) gegen eine Kupplungsscheibe (3) zu drücken, und der eine Eingriffszustand zwischen der Kupplungsscheibe (3) und dem Eingriffselement (6) aufrechterhält, wobei der Zylindermechanismus (11) Folgendes umfasst: einen Kolben (17), der zu dem Hebel (7) und von diesem weg bewegbar ist, indem er auf der äußeren Umfangsfläche eines Wellenelements (15), das auf der gleichen Achse wie die Kupplungsscheibe (3) gelegen ist, in einer axialen Richtung gleitet, eine Feder (20), die ein Presselement des Kolbens (17) in eine Referenzstellung vorspannt, in der das Presselement den Hebel (7) berührt, und ein Bewegungsmittel (27), um den Kolben (17) aus der Referenzstellung zu dem Hebel (7) zu bewegen, wobei der Zylindermechanismus (11), wenn der Hebel (7) verstellt wird, um die Kupplungsscheibe (3) und das Eingriffselement (6) durch die von dem Bewegungsmittel (27) bewirkte Bewegung des Kolbens (17) zu lösen, **dadurch gekennzeichnet ist, dass** er Folgendes umfasst:
ein Regelungsmittel (41, 42), um zu verhindern, dass der Kolben (17) von dem Bewegungsmittel (27) weiter in einer Löserichtung aus einer am nächsten zu dem Hebel (7) gelegenen Stellung innerhalb eines normalen Bewegungsbereichs des Kolbens (17) bewegt wird,
wobei das Regelungsmittel (41, 42) verhindert, dass der Kolben (17) in der Löserichtung über die am nächsten zu dem Hebel (7) gelegenen Stellung durch eine Vorspannkraft, die von der Feder (20) ausgeübt wird, wenn der Hebel (7) von dem Kolben (17) getrennt wird, hinaus bewegt wird.

2. Zylindermechanismus nach Anspruch 1, wobei der Kolben (17) eine zylindrische Form aufweist und um die äußere Umfangsfläche des Wellenelements (15) angebracht ist und in einem zylindrischen Außenkörper (16) eingesetzt ist, der koaxial mit dem Wellenelement (15) gelegen ist, wobei das Bewegungsmittel (27) den Kolben (17) zu dem Hebel (7) bewegt, indem es eine Druckkammer (22) mit Arbeitsöl versorgt, die an einer Endseite des Kolbens (17) gegenüber der Hebelseite des Kolbens (17) vorgesehen und durch das Wellenelement (15), den Kolben (17) und den Außenkörper (16) festgelegt ist, und wobei das Regelungsmittel (41, 42) den Druck in der Druckkammer (22) auf eine solche Weise steuert, dass eine Kraft, die auf Grund des Drucks in der Druckkammer (22) auf den Kolben (17) wirkt, in einer Richtung wirkt, die entgegengesetzt zu einer Vorspannkraft der Feder (20) verläuft, und größer als die Vorspannkraft ist.

3. Zylindermechanismus nach Anspruch 1, wobei der Kolben (17) eine zylindrische Form aufweist und um die äußere Umfangsfläche des Wellenelements (15) angebracht ist und in einem zylindrischen Außenkörper (16) eingesetzt ist, der koaxial mit dem Wellenelement (15) gelegen ist, wobei das Bewegungsmittel (27) den Kolben (17) zu dem Hebel (7) bewegt, indem es eine Druckkammer (22) mit Arbeitsöl versorgt, die an einer Endseite des Kolbens (17) gegenüber der Hebelseite des Kolbens (17) vorgesehen und durch das Wellenelement (15), den Kolben (17) und den Außenkörper (16) festgelegt ist, und wobei das Regelungsmittel (41, 42) verhindert, dass Arbeitsöl in die Druckkammer (22) und aus dieser heraus strömt.

4. Zylindermechanismus nach Anspruch 3, wobei das Regelungsmittel (41, 42) ein Auf-Zu-Ventil (41) umfasst, das an einer mit der Druckkammer (22) verbundenen Hydraulikleitung (25) vorgesehen ist, wobei die Hydraulikleitung (25) das Arbeitsöl in Bezug auf die Druckkammer (22) zu- und abfördert.

5. Zylindermechanismus nach Anspruch 4, wobei das Auf-Zu-Ventil (41) außerhalb eines Kupplungsgehäuses (12) vorgesehen ist.

6. Zylindermechanismus nach Anspruch 1 oder 2, wobei das Regelungsmittel eine Pumpe umfasst, um das Öl aus der Druckkammer (22) zu ziehen.

7. Zylindermechanismus nach einem der Ansprüche 1 bis 6, wobei das Regelungsmittel (41, 42) eine elektronische Steuereinheit (42) umfasst, die den Betrieb des Regelungsmittels (41) gemäß einem Betriebszustand eines Kraftfahrzeugs steuert, und die elektronische Steuereinheit (42) den Betrieb des Regelungsmittels (41) verhindert, wenn das Kraftfahrzeug in Betrieb ist, und den Betrieb des Regelungsmittels (41) ermöglicht, wenn das Kraftfahrzeug nicht in Betrieb ist.

8. Zylindermechanismus nach Anspruch 7, wobei das Regelungsmittel (41, 42) in einem Kupplungsgehäuse (12) vorgesehen ist.

9. Zylindermechanismus nach Anspruch 4, wobei das Auf-Zu-Ventil (41) in dem Abschnitt der Ölleitung (25) vorgesehen ist, der sich stromabwärts von einem Ablasshahn (26) befindet.

## Revendications

1. Mécanisme de cylindre (11), qui manipule un levier (7) qui est sollicité dans une direction de mise en prise pour presser un élément de mise en prise (6) contre une plaque d'embrayage (3) et qui maintient un état en prise entre la plaque d'embrayage (3) et l'élément de mise en prise (6), le mécanisme de cylindre (11) comprenant : un piston (17) qui est mobile vers et à l'opposé du levier (7) en coulissant sur la surface périphérique externe d'un élément d'arbre (15), qui est situé sur le même axe que la plaque d'embrayage (3), dans une direction axiale ; un ressort (20) qui sollicite un élément de pression du piston (17) vers une position de référence à laquelle l'élément de pression entre en contact avec le levier (7) ; et un moyen de déplacement (27) pour déplacer le piston (17) de la position de référence vers le levier (7), lorsque le levier (7) est déplacé pour libérer la plaque d'embrayage (3) et l'élément de mise en prise (6) par le mouvement du piston (17), provoqué par le moyen de déplacement (27), le mécanisme de cylindre (11) étant **caractérisé en ce qu'**il comprend :
un moyen de régulation (41, 42) pour empêcher le piston (17) d'être déplacé par le moyen de déplacement (27) plus loin dans une direction de libération à partir de la position la plus proche du levier (7) dans une plage de déplacement normal du piston (17),
le moyen de régulation (41, 42) empêchant le piston (17) d'être déplacé dans la direction de libération au-delà de la position la plus proche du levier (7) par une force de rappel exercée par le ressort (20) lorsque le levier (7) est séparé du piston (17) .

2. Mécanisme de cylindre selon la revendication 1, le piston (17) ayant une forme cylindrique et étant monté autour de la surface périphérique externe de l'élément d'arbre (15), et étant inséré dans un corps externe cylindrique (16) situé coaxialement avec l'élément d'arbre (15) ; le moyen de déplacement (27) déplaçant le piston (17) vers le levier (7) en fournissant de l'huile de travail à une chambre de pression (22), disposée à une extrémité du piston (17) opposée au côté du levier du piston (17), définie par l'élément d'arbre (15), le piston (17) et le corps externe (16) ; et le moyen de régulation (41, 42) commandant la pression dans la chambre de pression (22) de sorte que la force agissant sur le piston (17) en raison de la pression dans la chambre de pression (22) agisse dans une direction opposée à celle d'une force de rappel du ressort (20) et étant supérieure à la force de rappel.

3. Mécanisme de cylindre selon la revendication 1, le piston (17) ayant une forme cylindrique et étant monté autour de la surface périphérique externe de l'élément d'arbre (15), et étant inséré dans un corps externe cylindrique (16) situé coaxialement avec l'élément d'arbre (15) ; le moyen de déplacement (27) déplaçant le piston (17) vers le levier (7) en fournissant de l'huile de travail à une chambre de pression (22), disposée à une extrémité du piston (17) opposée au côté de levier du piston (17), définie par l'élément d'arbre (15), le piston (17) et le corps externe (16) ; et le moyen de régulation (41, 42) empêchant l'huile de travail de s'écouler dans et hors de la chambre de pression (22).

4. Mécanisme de cylindre selon la revendication 3, le moyen de régulation (41, 42) comprenant une soupape d'ouverture-fermeture (41) qui est disposée sur un tuyau hydraulique (25) relié à la chambre de pression (22), le tuyau hydraulique (25) fournissant et évacuant l'huile de pression par rapport à la chambre de pression (22).

5. Mécanisme de cylindre selon la revendication 4, la soupape d'ouverture-fermeture (41) étant disposée à l'extérieur d'un carter d'embrayage (12).

6. Mécanisme de cylindre selon la revendication 1 ou 2, le moyen de régulation comprenant une pompe pour aspirer l'huile de la chambre de pression (22).

7. Mécanisme de cylindre selon l'une quelconque des revendications 1 à 6, le moyen de régulation (41, 42) comprenant une unité de commande électronique (42) qui commande le fonctionnement du moyen de régulation (41) conformément à un état de fonctionnement d'un véhicule automobile ; et l'unité de commande électronique (42) empêchant le fonctionnement du moyen de régulation (41) lorsque le véhicule automobile est utilisé et permettant le fonctionnement du moyen de régulation (41) lorsque le véhicule automobile n'est pas utilisé.

8. Mécanisme de cylindre selon la revendication 7, le moyen de régulation (41, 42) étant disposé dans un carter d'embrayage (12).

9. Mécanisme de cylindre selon la revendication 4, la soupape d'ouverture-fermeture (41) étant disposée dans la partie du tuyau d'huile (25) qui est située en aval d'un purgeur (26).
